# FASCICULE DE BREVET EUROPEEN

(11) **EP 2 275 774 B1**
(45) Date de publication et mention de la délivrance du brevet: **27.01.2016**
(21) Numéro de dépôt: 10169873.6
(22) Date de dépôt: 16.07.2010
(51) Int. Cl.: F42C 15/44, F42B 39/20, F42C 9/16, F42B 39/14, F42B 15/36, F02K 9/38

(54) **Munition comprenant des moyens pour neutraliser son chargement explosif**
Munition mit Mitteln zur Neutralisierung seiner Sprengladung
Ammunition comprising means for neutralising its explosive charge

(30) Priorité: 17.07.2009 FR 0903515
(43) Date de publication de la demande: 19.01.2011
(73) Titulaire: TDA ARMEMENTS S.A.S., 45240 La Ferté Saint-Aubin (FR)
(72) Inventeur: Larousse, Didier, 45240, La Ferte Saint-Aubin (FR); Bourel, Alain, 45000, Orleans (FR); Bar, Christophe, 45160, Olivet (FR)
(74) Mandataire: Lucas, Laurent Jacques

(56) Documents cités:
- FR-A1- 2 608 265
- FR-A1- 2 791 425
- FR-A1- 2 906 606
- GB-A- 1 440 753
- US-A- 5 044 154

## Description

L'invention concerne une munition comprenant un chargement explosif confiné dans un compartiment et un dispositif de déconfinement apte à déconfiner le chargement explosif sous l'effet d'une élévation de pression ou de température au sein de la munition. Elle s'applique notamment à la neutralisation en vol de munitions.

Dans les conflits actuels, les forces armées se trouvent souvent à proximité de zones civiles, voire fondues dans des zones d'habitation civiles. Pour éviter les dommages collatéraux, en particulier pour prévenir le risque de toucher les populations civiles, les munitions modernes sont de plus en plus sophistiquées. Les munitions peuvent notamment être conçues pour provoquer des dégâts sur un périmètre relativement limité. Elles peuvent également être pourvues de moyens de guidage. Le guidage conduit généralement à une meilleure précision d'impact. Il permet donc la destruction d'une cible avec un risque limité d'atteinte à l'environnement voisin. Le guidage peut être assuré par un système de guidage au sol ou par un dispositif incorporé dans la munition. Un système de guidage au sol permet dans certains cas de rediriger la munition en cas de déplacement de la cible ou de changement d'objectif suffisamment anticipé. En revanche, une munition intégrant un dispositif de guidage devient en général complètement autonome après son lancement. Il n'est alors plus possible de modifier la cible. Quel que soit le type de guidage, des problèmes de sécurité se posent dans plusieurs circonstances. La munition peut par exemple prendre une trajectoire aberrante, c'est-à-dire une trajectoire ne lui permettant pas d'atteindre sa cible. La munition peut aussi rencontrer un obstacle sur sa trajectoire. Enfin, la mission peut devoir être abandonnée pour diverses raisons, notamment en cas de découverte d'une présence civile à proximité de la cible après le lancement de la munition. Ces problèmes de sécurité font apparaître un besoin de capacité à neutraliser une munition après son lancement. Par neutralisation de la munition, on entend le fait d'empêcher son chargement explosif d'exploser, c'est-à-dire de se décomposer en quelques microsecondes. En outre, la capacité à neutraliser une munition peut également s'avérer nécessaire même si la munition n'a pas été lancée. La neutralisation d'une munition non lancée présente par exemple un intérêt lorsque le lieu où elle se trouve stockée est menacé d'une attaque. Il est alors souhaitable que la munition, qui peut se trouver à proximité de forces militaires alliées, soit empêchée d'exploser.

Le document FR 2791425 A1 décrit un dispositif de déconfinement d'un corps de propulseur. Le dispositif de déconfinement consiste essentiellement en une ou plusieurs charges formées et en un moyen de commande permettant d'initier les charges formées. Les charges formées sont positionnées de manière à ce que le jet qu'elles engendrent lors de leur initiation réalise une découpe longitudinale de la paroi du propulseur. Le document US 5 044 154 A décrit un mécanisme de sécurité permettant de rendre un propulseur de roquette non propulsif. Le corps du propulseur est formé de deux parties assemblées par un joint prévu pour s'ouvrir lorsque la roquette est soumise à une température comprise entre la température ambiante et la température d'allumage du propergol. Le mécanisme de sécurité consiste en un cordeau détonant ou en une charge linéaire permettant d'ouvrir le joint.

Un but de l'invention est notamment de proposer une solution pour permettre de neutraliser sur commande une munition, que celle-ci ait ou non été lancée. A cet effet, l'invention a pour objet une munition comprenant un chargement explosif confiné dans un compartiment et un dispositif de déconfinement apte à déconfiner le chargement explosif sous l'effet d'une élévation de pression ou de température au sein de la munition, caractérisée en ce qu'elle comporte des moyens pour activer le dispositif de déconfinement, les moyens étant commandables.

L'invention a notamment pour avantage que l'explosion de la munition peut être empêchée à tout moment avant son impact. En particulier, même s'il est impossible de détourner la munition de sa cible, l'invention permet de la rendre moins destructrice. De plus, dans le cas où la munition est déjà équipée d'un dispositif de déconfinement, très peu de modifications structurelles sont nécessaires pour la rendre conforme à l'invention.

L'invention sera mieux comprise et d'autres avantages apparaîtront à la lecture de la description détaillée d'un mode de réalisation donné à titre d'exemple, description faite en regard de dessins annexés qui représentent :
- la figure 1, un exemple de munition selon l'invention dans une vue en coupe partielle selon un plan longitudinal de la munition, la munition étant en position de sécurité ;
- la figure 2, la munition de la figure 1 dans la même vue que la figure 1, la munition étant en position alignée.

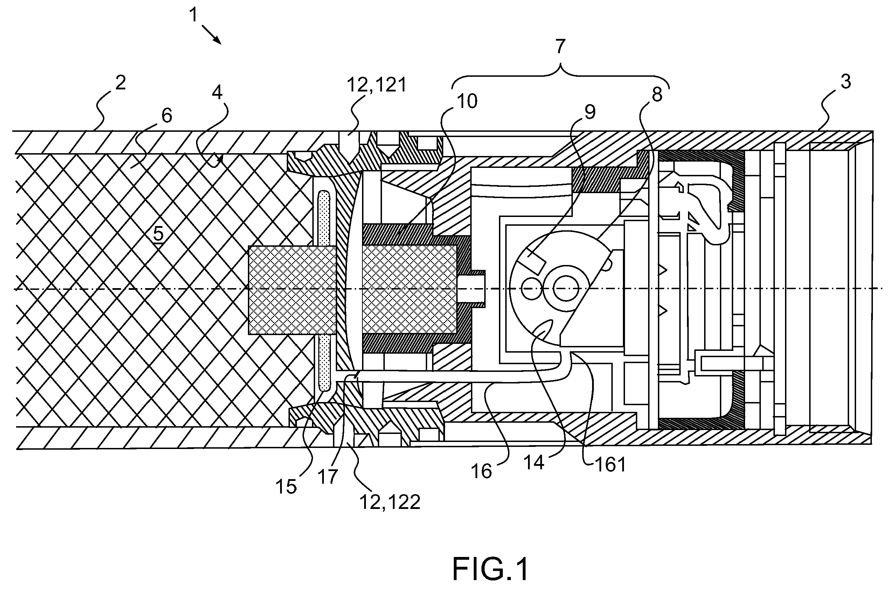

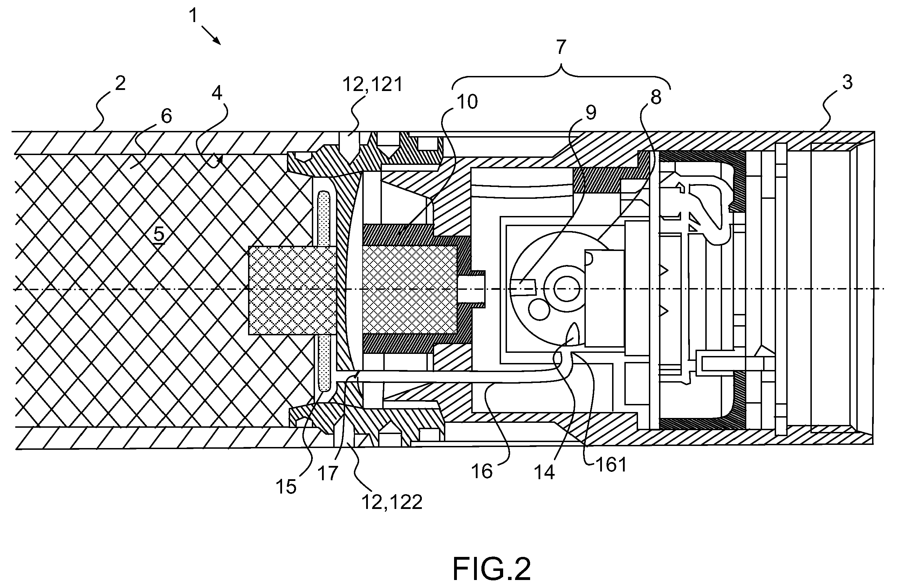

La figure 1 représente un exemple de munition selon l'invention dans une vue en coupe partielle selon un plan longitudinal de la munition. Sur cette figure, la munition est en position de sécurité. La figure 2 représente le même exemple de munition que celui de la figure 1 où la munition est en position alignée. Pour la suite de la description, on considère que la munition est une roquette. L'invention s'applique néanmoins à tout type de munition comportant un chargement explosif, notamment les missiles et les projectiles. La roquette 1 comporte un corps 2 de forme allongée et un dispositif de sécurité et de mise à feu 3 s'inscrivant dans le prolongement du corps 2. Le dispositif de sécurité et de mise à feu 3 est assemblé à l'une de ses extrémités au corps 2 de manière à former un culot, et à une autre extrémité à un propulseur, non représenté, apte à fournir une poussée pour l'avancée de la roquette 1. Le corps 2 et le dispositif de sécurité et de mise à feu 3 forment une enveloppe 4 étanche délimitant un compartiment 5. Le compartiment 5 contient un chargement explosif 6. Le dispositif de sécurité et de mise à feu 3 comprend une chaîne pyrotechnique d'amorçage 7 apte à déclencher l'explosion du chargement explosif 6. La chaîne pyrotechnique d'amorçage 7 comprend par exemple un rotor 8, un détonateur 9 et un relais pyrotechnique 10. Le détonateur 9 est monté sur le rotor 8 de manière à pouvoir venir s'aligner avec une première extrémité du relais pyrotechnique 10, comme représenté sur la figure 2, par un mouvement de rotation du rotor 8. Une seconde extrémité du relais pyrotechnique 10 débouche dans le compartiment 5 de manière à pouvoir déclencher l'explosion du chargement explosif 6. Sur la figure 1, la chaîne pyrotechnique d'amorçage 7 est représentée en position dite de sécurité, également appelée position désalignée dans la mesure où le détonateur 9 n'est pas aligné avec le relais pyrotechnique 10. Dans cette position, le déclenchement du détonateur 9 n'entraîne pas le fonctionnement du relais pyrotechnique 10. Ainsi, même en cas de déclenchement accidentel du détonateur 9, la roquette 1 ne risque pas d'exploser. La roquette 1 comporte de plus un dispositif de déconfinement 12. Le dispositif de déconfinement 12 permet de déconfiner le chargement explosif 6 de son compartiment 5 dans le but d'éviter une réaction violente du chargement explosif 6 lorsqu'il atteint sa température de décomposition. Le dispositif de déconfinement 12 entre dans le cadre du label MURAT, où MURAT est l'acronyme de "munition à risques atténués". Une munition à risques atténués est une munition qui satisfait aux conditions exigées en matière de performances, de disponibilité et de mise en oeuvre, mais pour laquelle on a réduit au minimum la probabilité d'une initiation intempestive ainsi que la violence de la réaction et les dommages collatéraux qui en résulteraient lorsqu'elle est soumise à des sollicitations accidentelles. En particulier, le dispositif de déconfinement 12 rend la roquette 1 insensible aux agressions thermiques telles que les incendies et les échauffements extérieurs pouvant survenir accidentellement sur le lieu de stockage de la roquette. Le dispositif de déconfinement 12 comporte par exemple des goupilles d'assemblage 121, 122 accouplant le corps 2 au dispositif de sécurité et de mise à feu 3. Ces goupilles 121, 122 sont adaptées pour se rompre sous l'effet d'une augmentation de pression ou de température au sein du compartiment 5. En cas de rupture des goupilles 121, 122, le corps 2 et le dispositif de sécurité et de mise à feu 3 sont désaccouplés, l'enveloppe 4 et le compartiment 5 perdant leur étanchéité. Toute montée en pression interne est alors empêchée. Le dispositif de déconfinement 12 peut par exemple exploiter le changement de phase (phase solide vers phase liquide) du chargement explosif 6 lors d'une augmentation de sa température. Le changement de phase implique une baisse de densité du chargement explosif 6 et donc une augmentation de pression dans le compartiment 5. Cette pression génère une force de poussée qui rompt les goupilles 121, 122. Les goupilles 121, 122 peuvent également être rompues du fait d'une amorce de décomposition du chargement explosif 6. La décomposition du chargement explosif 6 s'accompagne d'une génération importante de gaz. Les gaz provoquent alors la montée en pression nécessaire à la rupture mécanique des goupilles 121, 122. Après une telle rupture, le chargement explosif 6, ou ses gaz de décomposition, peuvent s'échapper librement et empêcher une montée en pression interne. La décomposition du chargement explosif 6 peut éventuellement continuer, mais sans augmentation de pression. Par conséquent, la réaction de décomposition ne risque pas de s'emballer. La roquette 1 est désamorcée. Dans l'exemple décrit en référence à la figure 1, le dispositif de déconfinement 12 comprend des goupilles d'assemblage 121, 122. Bien entendu, toute autre liaison mécanique comportant un point de rupture prédéterminé peut être envisagée pour accoupler le corps 2 et le dispositif de sécurité et de mise à feu 3 sans que l'on sorte du cadre de l'invention. Plus généralement, le dispositif de déconfinement 12 peut être tout moyen permettant de rompre l'étanchéité du compartiment 5.

Selon l'invention, la roquette 1 comprend des moyens commandables pour activer le dispositif de déconfinement. Ces moyens sont constitués de moyens techniques permettant d'activer volontairement le dispositif de déconfinement 12 en réponse à une commande d'un opérateur ou d'un automatisme. Ils comprennent un inflammateur 14 et une charge de poudre 15. Par inflammateur, on entend tout dispositif apte à produire une flamme, des gaz chauds et/ou des particules chaudes de manière à entraîner une combustion d'une charge de poudre. Selon l'invention, la charge de poudre 15 est disposée dans le compartiment 5 avec le chargement explosif 6. Celà permet de faire monter la température et la pression au sein du compartiment 5 à la fois directement, par la combustion de la charge de poudre 15, et indirectement, par une décomposition lente du chargement explosif 6 entraînée par la combustion de la charge de poudre 15 dans son voisinage. Il est à noter que tous les types de chargements explosifs ne se décomposent pas avec la combustion d'une charge de poudre. La montée en pression est alors uniquement due à la combustion de la charge de poudre 15. Cette montée en pression dans le compartiment 5 permet d'actionner le dispositif de déconfinement 12. Dans l'exemple des figures 1 et 2, la montée en pression génère des forces tendant à cisailler les goupilles 121, 122, de la même manière que si la roquette 1 était soumise à un échauffement thermique accidentel.

Selon une forme particulière de réalisation, notamment représentée par les figures 1 et 2, les moyens pour activer le dispositif de déconfinement comprennent en outre un canal 16 apte à relier une sortie de l'inflammateur 14 à la charge de poudre 15. Ce canal 16 permet de guider la flamme, les gaz chauds et/ou les particules chaudes jusqu'à la charge de poudre 15, notamment lorsque l'inflammateur 14 n'est pas situé à proximité immédiate de la charge de poudre 15. L'inflammateur 14 est par exemple implanté dans le dispositif de sécurité et de mise à feu 3. Avantageusement, le canal 16 comporte un clapet antiretour 17 s'ouvrant pour le passage de la flamme, des gaz chauds et/ou des particules chaudes vers la charge de poudre 15. En position fermée, il assure l'étanchéité de l'enveloppe 4 et permet donc une montée en pression à l'intérieur du compartiment 5.

Dans une variante de réalisation, l'inflammateur 14 est monté sur le rotor 8. Il est préférentiellement monté de manière à ce que sa sortie vienne s'aligner avec une extrémité 161 du canal 16 en même temps que le détonateur 9 vient s'aligner avec le relais pyrotechnique 10. Cette variante de réalisation permet d'abandonner rapidement une mission en vol. En effet, lorsqu'une munition est en vol, le détonateur 9 et le relais pyrotechnique 10 sont alignés. Le dispositif de déconfinement 12 peut ainsi être actionné sans avoir à modifier au préalable le positionnement du rotor 8.

Selon une forme particulière de réalisation, non représentée, les moyens pour activer le dispositif de déconfinement comportent des moyens pour détecter que la trajectoire effectivement suivie par la roquette 1 dévie d'une trajectoire prédéterminée. Ces derniers moyens peuvent n'être qu'en partie implantés dans la roquette 1. Ceci est par exemple le cas lorsque la trajectoire effective de la roquette 1 est suivie par un radar ou à l'aide d'un système de positionnement par satellites, comme le système de positionnement mondial, bien connu selon l'expression anglo-saxonne "global positioning system". S'il est détecté que la roquette 1 suit une trajectoire incompatible avec son objectif, la roquette 1 peut alors être neutralisée par l'intermédiaire des moyens pour activer le dispositif de déconfinement 12.

Selon une autre forme particulière de réalisation, les moyens pour activer le dispositif de déconfinement comportent des moyens pour recevoir une demande de neutralisation de la roquette, cette demande étant faite à distance. Il s'agit par exemple d'un récepteur radio apte à recevoir un signal émis par un opérateur ou un automatisme.

## Revendications

1. Munition comprenant un chargement explosif (6) confiné dans un compartiment (5), un dispositif de déconfinement (12) apte à déconfiner le chargement explosif (6) sous l'effet d'une élévation de pression ou de température au sein du compartiment (5), et des moyens (14, 15, 16) pour activer le dispositif de déconfinement, les moyens étant commandables, la munition (1) étant **caractérisée en ce que** les moyens (14, 15, 16) pour activer le dispositif de déconfinement comprennent une charge de poudre (15) disposée dans le compartiment (5) de manière à pouvoir y faire monter la pression ou la température, et des moyens de mise en combustion de la charge de poudre (15).

2. Munition selon la revendication 1, **caractérisée en ce que** le compartiment (5) est formé par l'accouplement d'au moins deux parties (2, 3), le dispositif de déconfinement (12) comportant une liaison mécanique (121, 121) réalisant l'accouplement des deux parties (2, 3) du compartiment (5) et étant adaptée pour se rompre sous l'effet d'une élévation de pression ou de température dans le compartiment (5).

3. Munition selon l'une des revendications 1 et 2, **caractérisée en ce que** les moyens (14, 15, 16) pour activer le dispositif de déconfinement comportent en outre un canal (16) apte à relier une sortie des moyens (14) de mise en combustion de la charge de poudre à la charge de poudre (15), le canal (16) comportant un clapet antiretour (17) permettant le passage de gaz et/ou de particules des moyens (14) de mise en combustion de la charge de poudre vers la charge de poudre (15).

4. Munition selon la revendication 3, **caractérisée en ce qu'**elle comporte une chaîne pyrotechnique d'amorçage (7) comprenant un détonateur (9) et un relais pyrotechnique (10), le détonateur (9) et les moyens (14) de mise en combustion de la charge de poudre étant montés sur un rotor (8) de manière à pouvoir venir s'aligner simultanément avec, respectivement, le relais pyrotechnique (10) et une extrémité (161) du canal (16).

5. Munition selon l'une quelconque des revendications précédentes, **caractérisée en ce que** les moyens (14, 15, 16) pour activer le dispositif de déconfinement comportent des moyens pour détecter qu'une trajectoire effective de la munition dévie d'une trajectoire prédéterminée.

6. Munition selon l'une quelconque des revendications précédentes, **caractérisée en ce que** les moyens (14, 15, 16) pour activer le dispositif de déconfinement comportent des moyens pour recevoir une demande de neutralisation de la munition (1), cette demande étant faite à distance.

## Patentansprüche

1. Munition, die eine Sprengladung (6) umfasst, die in einer Kammer (5) untergebracht ist, eine Freisetzungsvorrichtung (12) zum Freisetzen der Sprengladung (6) unter der Wirkung einer Erhöhung von Druck oder Temperatur im Innern der Kammer (5), und Mittel (14, 15, 16) zum Aktivieren der Freisetzungsvorrichtung, wobei die Mittel steuerbar sind, wobei die Munition (1) **dadurch gekennzeichnet ist, dass** die Mittel (14, 15, 16) zum Aktivieren der Freisetzungsvorrichtung eine Pulverladung (15) umfassen, die so in der Kammer (5) angeordnet ist, dass ihr(e) Druck oder Temperatur erhöht werden kann, und Mittel, um die Pulverladung (15) in Brand zu setzen.

2. Munition nach Anspruch 1, **dadurch gekennzeichnet, dass** die Kammer (5) durch Koppeln von wenigstens zwei Teilen (2, 3) miteinander gebildet wird, wobei die Freisetzungsvorrichtung (12) eine mechanische Verbindung (121, 121) umfasst, die das Koppeln der zwei Teile (2, 3) der Kammer (5) miteinander realisiert und so ausgelegt ist, dass sie unter der Wirkung einer Erhöhung des Drucks oder der Temperatur in der Kammer (5) bricht.

3. Munition nach einem der Ansprüche 1 und 2, **dadurch gekennzeichnet, dass** die Mittel (14, 15, 16) zum Aktivieren der Freisetzungsvorrichtung darüber hinaus einen Kanal (16) zum Verbinden eines Ausgangs der Mittel (14) zum Inbrandsetzen der Pulverladung mit der Pulverladung (15) umfasst, wobei der Kanal (16) ein Rückschlagventil (17) umfasst, das den Durchgang von Gas und/oder Partikeln der Mittel (14) zum Inbrandsetzen der Pulverladung zur Pulverladung (15) ermöglicht.

4. Munition nach Anspruch 3, **dadurch gekennzeichnet, dass** sie eine pyrotechnische Zündkette (7) umfasst, die einen Zünder (9) und ein pyrotechnisches Relais (10) umfasst, wobei der Zünder (9) und die Mittel (14) zum Inbrandsetzen der Pulverladung so an einem Rotor (8) montiert sind, dass sie jeweils gleichzeitig mit dem pyrotechnischen Relais (10) und einem Ende (161) des Kanals (16) ausgerichtet werden können.

5. Munition nach einem der vorherigen Ansprüche, **dadurch gekennzeichnet, dass** die Mittel (14, 15, 16) zum Aktivieren der Freisetzungsvorrichtung Mittel zum Erkennen einer Abweichung der tatsächlichen Bahn der Munition von einer vorbestimmten Bahn umfassen.

6. Munition nach einem der vorherigen Ansprüche, **dadurch gekennzeichnet, dass** die Mittel (14, 15, 16) zum Aktivieren der Freisetzungsvorrichtung Mittel zum Empfangen eines Befehls zum Neutralisieren der Munition (1) umfassen, wobei dieser Befehl von einer ortsfernen Stelle ergeht.

## Claims

1. Ammunition comprising an explosive charge (6) which is confined in a compartment (5), a deconfinement device (12) which is capable of deconfining the explosive charge (6) under the action of an increase of pressure or temperature within the compartment (5) and means (14, 15, 16) for activating the deconfinement device, the means being able to be controlled, the ammunition (1) being **characterised in that** the means (14, 15, 16) for activating the deconfinement device comprise a powder charge (15) which is arranged in the compartment (5) in order to be able to cause the pressure or the temperature to increase at that location, and means for combustion of the powder charge (15).

2. Ammunition according to claim 1, **characterised in that** the compartment (5) is formed by the coupling of at least two portions (2, 3), the deconfinement device (12) comprising a mechanical connection (121, 121) which carries out the coupling of the two portions (2, 3) of the compartment (5) and which is adapted to break under the action of a pressure or temperature increase in the compartment (5).

3. Ammunition according to either claim 1 or claim 2, **characterised in that** the means (14, 15, 16) for activating the deconfinement device further comprise a channel (16) which is capable of connecting an output of the means (14) for combustion of the powder charge (15) to the powder charge (15), the channel (16) comprising a non-return valve (17) which enables the passage of gas and/or particles of the means (14) for combustion of the powder charge to the powder charge (15).

4. Ammunition according to claim 3, **characterised in that** it comprises a pyrotechnical ignition chain (7) which comprises a detonator (9) and a pyrotechnical relay (10), the detonator (9) and the means (14) for combustion of the powder charge being mounted on a rotor (8) in order to be able to be aligned simultaneously with the pyrotechnical relay (10) and an end (161) of the channel (16), respectively.

5. Ammunition according to any one of the preceding claims, **characterised in that** the means (14, 15, 16) for activating the deconfinement device comprise means for detecting that an effective trajectory of the ammunition deviates from a predetermined trajectory.

6. Ammunition according to any one of the preceding claims, **characterised in that** the means (14, 15, 16) for activating the deconfinement device comprise means for receiving a request for neutralisation of the ammunition (1), this request being made remotely.
